# EUROPEAN PATENT APPLICATION

(11) **EP 0 797 161 A2**
(43) Date of publication of application: **24.09.1997**
(21) Application number: 97301934.2
(22) Date of filing: 21.03.1997
(51) Int. Cl.: G06F 17/30

(54) **Computer system and computerimplemented process for applying database segment definitions to a database**

(30) Priority: 22.03.1996 US 620967; 24.10.1996 US 735652
(71) Applicant: Pilot Software Inc, Cambridge, Massachusetts 02141 (US)
(72) Inventor: Yarmus, Joseph S., Groton, Massachusetts 01450 (US); Bourgoin, Mario O., Cambridge, Massachusetts 02139 (US); Kaulgud, Milind, Boxborough, Massachusetts 01719 (US)
(74) Representative: Garratt, Peter Douglas

(57) **Abstract**

Database segment definitions are applied to entities in a database by issuing statements to the database, rather than extracting a flat file of data, in order to identify the segments in which an entity is classified. The resulting classification is stored in the database. A segment definition is applied in several steps. Intermediate results are stored in temporary structures in the database and use a temporary identification for each entity to handle the fact that intermediate results may place an entity in more than one segment. Intermediate results are combined together to obtain a final classification. For relational databases accessed using SQL, the temporary results are stored in intermediate tables and statements issued to the database are generated according to the segment definitions and the scheme for assigning temporary identifiers. One scheme for temporary identifiers reduces the number of segments in which an entity might be classified, whereas another scheme reduces the number of statements generated.

## Description

This invention is related to computer database systems and systems for classifying and applying classifications to entities in a computer database.

Database classification systems are becoming increasingly important database tools. Such systems, for example, allow businesses to sift through information in their databases to identify patterns related to desired performance, which in turn can be used to make predictions and decisions concerning marketing, manufacturing, and other important business activities. Such database classification is sometimes referred to as data mining.

Database classification systems generally partition a database into segments such that entities within each segment are generally homogeneous with respect to those characteristics relevant to a target condition. Each segment is defined by a selection criterion and has an associated statistical measure that indicates how well an entity in the segment meets the target condition. Example statistical measures include probability or an average measure or an average rate.

A database classification system typically uses two sets of data: a training set which is used to determine the segmentation of the database, and an apply set on which the segmentation is applied to assist in making predictions about entities in the apply set. With most database classification systems, these data sets are extracted from a database as a flat file, i.e., a simple computer data file, such as an ASCII text file. The extraction of a flat file involves substantial unnecessary data copying, particularly in large customer databases which may contain several terabytes of data.

Accordingly, a general aim of this invention is to provide a system and method for applying segment definitions to a database while operating on data in the database and without extracting a large flat file.

In the present invention, data for entities are analyzed in the database in which they are stored, so as to avoid copying large amounts of data. A segmentation, composed of several segment definitions and determined using some classification methodology, is applied to the data to identify the segments in which the entities reside.

There are several problems encountered in applying segment definitions to data in a relational database. In a relational database the data may reside in several separate tables. Thus, in order to determine whether variables in fields for an entity meet some condition defined by the segmentation information, it may be necessary to join two or more tables. There are several problems associated with joining multiple tables, but the primary problem is the demand on the resources of the database management system, such as its processor, available memory, input and output, and overhead needed to manage the accesses to the database. This problem is particularly acute with large databases of several terabytes of data. Because of this impact on the database management system, some system administrators place a limit on the number of tables that can be joined in one operation, typically to two.

If the fields of a database which appear in a segment definition, herein called predictors, reside in a number of tables which is more than that allowed for a join operation, several steps may be needed to determine the segment in which an entity belongs. Several problems occur when a segment definition is applied in a sequence of steps to a database. First of all, there will be at least two segments for which a particular step does not result in enough information to completely classify all entities being analyzed because the definitions of the segments involve conditions applied to fields that are not in the tables being joined. This implies that some temporary identification system is needed. Moreover, when fields in the tables being joined in a particular step are "null" for an entity in both tables, this entity is dropped from the table resulting from the join operation, according to ANSI SQL. However, these dropped entities actually may be able to meet other segment definitions and should not be dropped.

The present invention solves both of these problems, thereby enabling a segmentation to be applied within a relational database without extracting a large flat file.

Accordingly, one aspect of the present invention is a computer database system for applying selection criteria from segment definitions to a database of entities with a plurality of fields in different tables. This system includes a mechanism for storing a mapping of temporary identifiers to segment entity identifiers according to queries which represent a portion of a segment definition. Another mechanism generates intermediate classifications of the entities in the database using temporary identifiers according to the stored mapping. Intermediate classifications are combined into a final classification of a set of entities into segments.

Another aspect of the present invention is a process for applying selection criteria from segment definitions to a database of entities with a plurality of fields in different tables. This process involves storing a mapping of temporary identifiers to segment identifiers according to queries which represent a portion of a segment definition. Intermediate classifications of the entities in the database are generated using temporary identifiers according to the stored mapping. Intermediate classifications are combined into a final classification of a set of entities into segments.

In one embodiment of the present invention the mapping of temporary identifiers is designed to reduce the number of intermediate classifications for a given entity. This mapping may be done in a manner such that the value set associated with a test on a predictor is not altered. This mapping scheme and its embodiments are also aspects of the present invention.

In another embodiment, the mapping of temporary identifiers is such that each segment has only one identifier. In each iteration, at most one clause is generated for each segment.

In another embodiment of the present invention the mapping of temporary identifiers is designed to reduce the number of simultaneous queries that establish conditions for inserting entities into a temporary table along with temporary segment identifiers. This mapping scheme and its embodiments are also aspects of the present invention.

In another embodiment of the present invention, intermediate classifications are generated in an iterative process in which a user-supplied limit on the maximum number of joinable database tables is provided.

In another embodiment of the present invention, the final classification of the set of entities is stored in the database such that the final classification is accessible in a manner similar to other data in the database.

Another embodiment of the invention is a processing module that generates database queries which perform intermediate classifications. These intermediate classifications may be performed according to a mapping scheme as in other embodiments of the present invention. This processing module may be accessed through an application programming interface. This module and its interface are also aspects of the present invention.

The present invention is particularly applicable to relational databases accessed using SQL.

The various combinations of one or more aspects of the present invention, and the embodiments thereof also are aspects of the present invention. It should be understood that those of ordinary skill in the art can derive other embodiments of the invention from the following detailed description of an example embodiment, and that the invention is not limited to this example.

The invention will now be described by way of reference to the accompanying drawings in which:-
FIG. 1 is a perspective view of a computer system;
FIG. 2 is a block diagram of the computer system of FIG. 1;
FIG. 3 is a schematic diagram of the memory system shown in FIG. 2;
FIG. 4 is a data flow diagram of a system for applying segment definitions connected to a database management system;
FIG. 5 is a table for relating segment identifiers to test identifiers defining segments;
FIG. 6 is a table for relating predictors for each test identifier including the operation, data type and table associated with the predictor;
FIG. 7A is a table for relating a test identifier to the values used in the test;
FIG. 7B is a table for relating a test identifier to test information for compound data types;
FIG. 8 is a table for relating a key field for entities in the data base to segment identifiers, which is the output of an embodiment of the present invention;
FIG. 9A is a flowchart describing generally how segment definitions are applied to a database;
FIG. 9B is a data flow diagram illustrating one embodiment of the invention in which construction of SQL statements to generate intermediate tables is performed via an application programming interface;
FIG. 10A is a struct used to represent and store data used to construct SQL statements from a segment definition in one embodiment of the invention;
FIG. 10B is a struct used to represent and store a rule for a segment;
FIG. 11 is a struct used to generate pseudo segment identifiers (PseudoSID);
FIG. 12 is a struct used in one embodiment of the invention to return an indication of an SQL command to be generated;
FIG. 13 is a flowchart describing one method for generating SQL statements for an iteration;
FIG. 14 is a struct used to represent and store data used to construct SQL statements from a segment definition in another embodiment of the invention;
FIG. 15 is a struct used to generate pseudo-segment identifiers in another embodiment of the invention; and
FIG. 16 is a flowchart describing a second method for generating SQL statements for an iteration.

The present invention will be more completely understood through the following detailed description which should be read in conjunction with the attached drawing in which similar reference numbers indicate similar structures. All references cited herein are hereby expressly incorporated by reference.

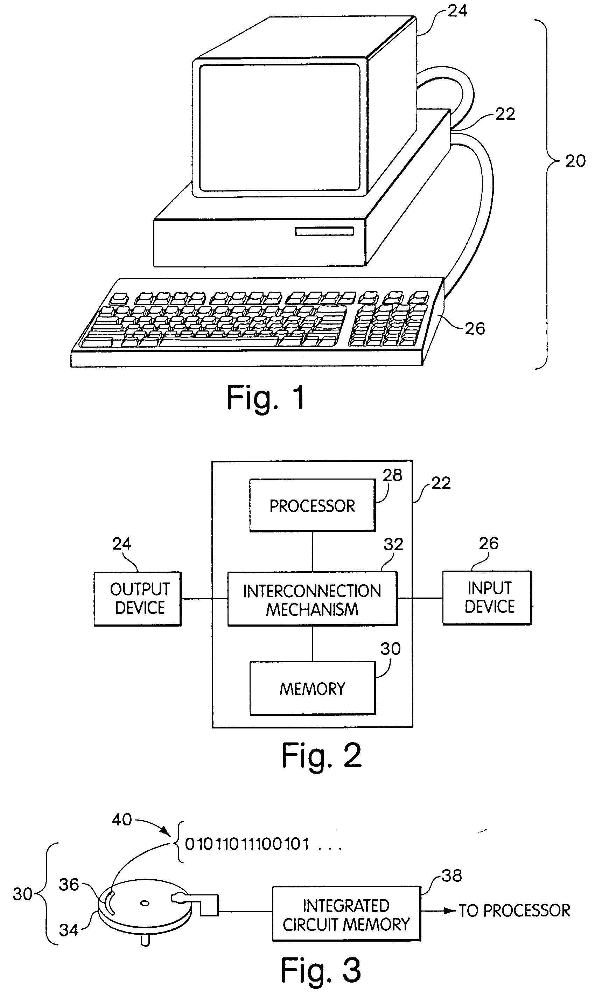

Referring now to FIG. 1, a computer system 20 includes an output device 24 which displays information to a user. The computer system includes a main unit 22 connected to the output device 24 and an input device 26, herein shown as a keyboard. As shown in FIG. 2, the main unit 22 generally includes a processor 28 connected to a memory system 30 via an interconnection mechanism 32. The input device 26 is also connected to the processor and memory system via the connection mechanism, as is the output device 24.

It should be understood that one or more output devices may be connected to the computer system. Example output devices include a cathode ray tube (CRT) display, liquid crystal displays (LCD), printers, communication devices such as a modem, and audio output. It should also be understood that one or more input devices 26 may be connected to the computer system. Example input devices include a keyboard, keypad, track ball, mouse, pen and tablet, communication device, audio input and scanner. It should be understood the invention is not limited to the particular input or output devices used in combination with the computer system or to those described herein.

The computer system 20 may be a general purpose computer system which is programmable using a high level computer programming language, such as "C, or "Pascal." The computer system may also be specially programmed, special purpose hardware. In a general purpose computer system, the processor is typically a commercially available processor, of which the series x86 processors, available from Intel, and the 680X0 series microprocessors available from Motorola are examples. Many other processors are available. Such a microprocessor executes a program called an operating system, of which UNIX, DOS and VMS are examples, which controls the execution of other computer programs and provides scheduling, debugging, input/output control, accounting, compilation, storage assignment, data management and memory management, and communication control and related services. The processor and operating system define a computer platform for which application programs in high-level programming languages are written.

It should be understood the invention is not limited to a particular computer platform, particular processor, or particular high-level programming language. Additionally, the computer system 20 may be a multiprocessor computer system or may include multiple computers connected over a computer network.

An example memory system 30 will now be described in more detail in connection with FIG. 3. A memory system typically includes a computer readable and writeable nonvolatile recording medium 34, of which a magnetic disk, a flash memory and tape are examples. The disk may be removable, known as a floppy disk, or permanent, known as a hard drive. A disk, which is shown in FIG. 3, has a number of tracks, as indicated at 36, in which signals are stored, typically in binary form, i.e., a form interpreted as a sequence of one and zeros such as shown at 40. Such signals may define an application program to be executed by the microprocessor, or information stored on the disk to be processed by the application program. Typically, in operation, the processor 28 causes data to be read from the nonvolatile recording medium 34 into an integrated circuit memory element 38, which is typically a volatile, random access memory such as a dynamic random access memory (DRAM) or static memory (SRAM). The integrated circuit memory element 38 allows for faster access to the information by the processor than does the disk 34. The processor generally manipulates the data within the integrated circuit memory 38 and then copies the data to the disk 34 when processing is completed. A variety of mechanisms are known for managing data movement between the disk 34 and the integrated circuit memory element 38, and the invention is not limited thereto. It should also be understood that the invention is not limited to a particular memory system.

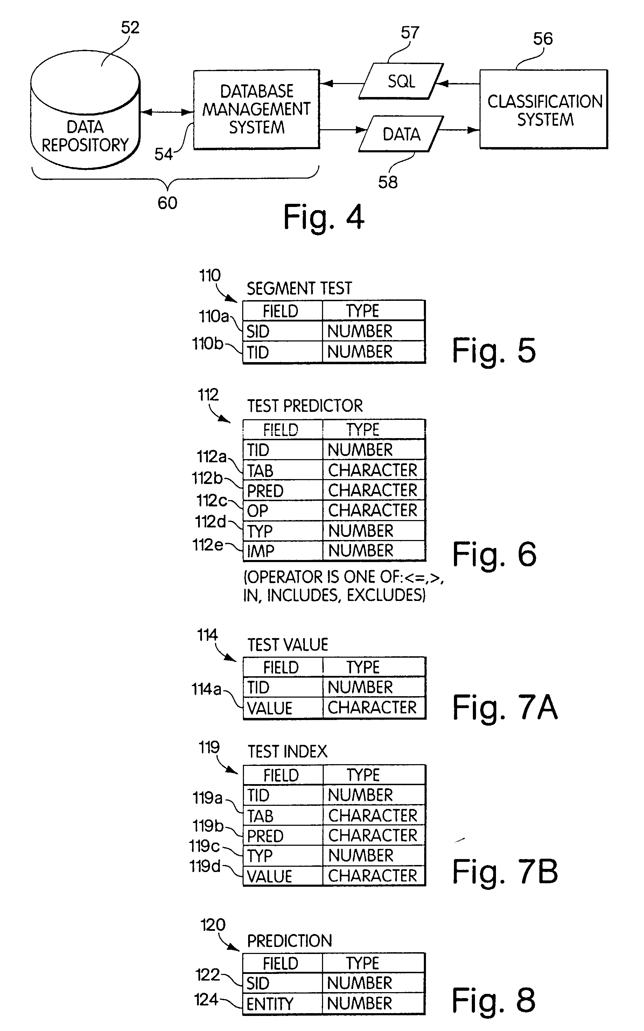

FIG. 4 is a block diagram illustrating a system for applying segment definition to entities in a database, in one embodiment of the invention. This system includes a database 60 which includes a data repository 52 for storing the data of the database, which may include memory system such as shown at 30 in FIG. 3. The database 60 also includes a database management system 54 which controls access to the data and handles copying of data between the different memory levels of the memory system 30.

Such a database management system typically provides access through a standard interface, for example, the Structured Query Language (SQL), such as described in SQL: The Structured Query Language, by C.J. Hursch et al. (Blue Ridge Summit, Pennsylvania: TAB Books, 1988), which is hereby incorporated by reference. An example relational database management system is the ORACLE-7 database, having an ODBC interface. Such a database is accessed using SQL queries encapsulated in an ODBC message sent to the database server by a client program. Although the following description is given in terms of a particular example, using a relational database on a database server, accessed using SQL by a client program, it should be understood that the invention is not limited thereto and that other kinds of databases and other access mechanisms may be used.

The present invention is also useful with database for operation on a machine with parallel processors. Such DBMS's include the DB2 and ORACLE-7 database management systems available from International Business Machines and Oracle, respectively.

A relational database is organized using tables of records. Each record contains related information that is organized into fields. Typical examples are customer lists wherein each customer has one or more records containing fields for address, telephone number, and so on. Some fields include variables such as total purchases, payments made each month and so on. Each thing in the database that has a unique identifier, such as a customer, is considered an entity in the database. An entity may have one or more records. The data in a database may be of many types, including simple and compound data types. Simple data types include numbers, dates and strings, for example, while compound data types include sets and arrays, for example. Simple data types are represented as records that associate a unique identifier with a single value while compound data types associate a unique identifier with multiple values. When the compound data type is an array, additional fields are used to index each value. The different types of data may involve different types of access queries and other operations.

It is desirable to apply data warehousing techniques to the database 60 prior to applying segment definitions to the data. Such techniques involve ensuring that the data in the database are complete and correct and have correct formats. A database classification system 56 retrieves data 58 from the database 60 and classifies entities by applying segment definitions via SQL statements 57 as described below in connection with FIGS. 5-7. Classification and regression trees (CART) are one technique used to create segment definitions. Classification and regression trees are described in more detail in Classification and Regression Trees by L. Breiman, et al. (Belmont, California: Wadsworth International Group, 1984), which is hereby incorporated by reference.

A system which applies the segmentation definitions to database entities receives as one input the segment definitions. Such segment definitions may come in a variety of forms. As an example, segment definitions may be provided using three tables as in FIGS.5-7B. These tables may be generated using a process described in the commonly-owned European patent application entitled "Computer System and
Computer-Implemented Process for Classifying Records in a Computer Database," filed on even date herewith, by Mario Bourgoin et al. There are many other ways to store segment definitions, and the invention is not limited to this example. One table is the segment test table 110 in FIG. 5. This table includes a column for a segment identifier (SID) 110a for each leaf node in the decision tree and column for
a test identifier (TID) 110b associated with the segment. A second table is a test predictor table 112 in FIG. 6. This table includes, for each TID, an indication 112a the table in which the field is located, an indicator 112b of the predictor field, the operation 112c performed on the value in the field and the type 112d of the data (whether categorical or ordered). An indication 112e of the importance of the test is also provided. The importance of a test may be indicated by, for example, the Gini metric associated with the test. A test value table 114 in FIG. 7 is also used which includes, for each TID, a list 114a of values used for each of the operations in the test predictor table 112. As one example, assume that a segment N was defined by the rules A>1 and A<3, applied to a variable A, a number, in table T. The segment test table 110 would include a TID, e.g., X, for the segment N. The test predictor table 112 would include, in two rows for X, an indication of the table T, the predictor A, the operations < and > and the type "ordered." The test value table would include, for the TID X, a row for each of "1" and "3".

For compound data types an additional test index table 119, as shown in FIG. 7B, may also be provided. The test index table includes at least one row for each TID corresponding to a compound data type. Another column 119a indicates the table containing the predictor, indicated at 119b. The type 119c of the predictor and a value 119d for the test are also provided. For example, assume a test uses revenue of a month as a predictor, where this revenue is stored as an array indexed by month. The test predictor table 112 could include the following row:

| TID | Tab | Pred | Op | Typ | Imp |
|---|---|---|---|---|---|
| 1 | Performance | Revenue | ≤ | numeric | 0.8 |

and the test index table could include the following row:

| TID | Tab | Pred | Typ | Value |
|---|---|---|---|---|
| 1 | Performance | Month | String | January |

Additional test predictor, test value and test index tables may also be generated for each TID for other tests called surrogates. A surrogate is a test on another predictor that produces results which are statistically similar to the results obtained by the actual test represented by the TID. In such a case, these tables have the same format as the tables for the actual test, but the importance value 112d represents the agreement between the surrogate and the test. This agreement may be represented, for example, by a ratio of the number of entities which are classified in the same segment by the different tests to the total number of entities classified in that segment by either test.

Given a set of segment definitions, as provided in, for example, tables 100, 106 and 118, these segment definitions may be applied to a database, or a subset of a database, to generate a prediction table 120 that assigns records to segments. In the prediction table, a segment identifier (SID) 122 is assigned to each entity 124 in a sample of the relational database given the selection criterion defined by each segment definition.

The process of applying a segment definition to a database in some instances could simply involve generating an SQL statement representing the entire segment definition and issuing this SQL statement to the database. This process is often not practical, particularly for large databases, because the definition of each segment generally involves predictors in more than two tables in the database. It is desirable to reduce the number of tables joined by an SQL statement in order to reduce processing overhead by the database management system and to reduce the demand on database management system resources, such as the processor, available memory and input and output. Such demands reduce the efficiency of other applications using the database.

There are two problems to be overcome when applying segment definitions to data as a sequence of, for example, individual SQL statements, rather than as a single statement. The first problem is storing intermediate results and how to represent the significance of a particular intermediate result. For example, suppose that there are two segments, e.g., 4 and 5, defined by the following rules:
Segment 4: A1>6 and A2 ≤ 5 and A3 >17
Segment 5: A1>6 and A2 ≤ 5 and A3 ≤ 17, where A1, A2 and A3 each reside in different tables. At some time in the process of applying these rules, if the tables containing A1 and A2 are joined, but not A3, any entity having A1>6 and A2≤5 could be in either segment 4 or segment 5. In such a case, an entity is labelled with a temporary segment identifier, herein called a pseudoSID. At some later time this intermediate result is joined with a table containing A3, and entities in segment 4 and segment 5 are assigned the appropriate segment identifier (herein called an SID).

The second problem which arises when applying rules for only a portion of the predictors at a time is that, in ANSI SQL, an entity having a "null" in fields used in a "where" clause of a join does not appear in the result set of the join. If such an entity nonetheless meets the set of rules for some segment, but has "nulls" in fields of other predictors, the entity may disappear from a result set, depending on the order in which the joins occur.

While it may be possible to use a representation of a decision tree defining the segmentation to solve these problems, processing a very large relational database using a decision tree is inefficient with current database management systems. Such processing is particularly inefficient since predictors from a single tables may occur at different levels in the decision tree.

These problems may be solved by an iterative process in which appropriate SQL statements are generated from segment definitions and issued to the database to generate intermediate tables in the database. These intermediate tables are generally identical in form to the prediction table in FIG. 8, but are created and dropped in the iterative process. These tables store pseudoSIDs rather than SIDs for each entity, until the entity can be placed definitively in a given segment.

At each iteration, a "CREATE TABLE" clause is issued to the database which creates and configures a temporary table. An "INSERT INTO" clause is issued to put the pseudoSID and keyfield of an entity in the temporary table. This clause contains a "WHERE" subclause which contains the currently used rules used to define the segment. A rule includes a predictor, an operator and a value, e.g., a<3. For categorical predictors, a set test is performed. To avoid problems with long strings of values, a clause in the form of "IN (SELECT value FROM value table WHERE tid=m)" replaces clauses in the form of "IN ("14159", "02193", "22568"). A "DROP" clause also should be issued for each table before it is created. The "DROP" table clause avoids potential name collisions that may result in serious database errors and avoids proliferation of intermediate tables. An example set of SQL statement forms to be generated for one iteration of this process is shown in Appendix I.

The pseudoSID to assign to a given segment may be selected in many ways. However, a good assignment scheme should ensure that all entities are preserved in the result set of each interim step unless there is sufficient information to determine that the entity is unclassifiable. Additionally, the scheme should classify efficiently an entity into as few categories as possible without altering the value set of any univariate test. Finally, the scheme should generate SQL statements efficiently, i.e., in a limited number. In both of these schemes, the temporary identifiers that are assigned are negative integers, in sequence as they are encountered. This naming scheme is very compact, i.e., uses the minimum number of bits to name each member of the set of pseudoSIDs.

Although it is possible to modify the value set associated with a univariate test, such modification applies only to ordered predictors. Modification of a value set means identifying the unique partitions defined by different rules on the same predictor. For example, given two rules a≤2 and a≤ 5, there are three partition: a ≤2, 2 ≤5, a >5. Additionally, such a modification would require knowledge of the values associated with a given test. The embodiment described below avoids this requirement.

Two example schemes for assigning pseudoSIDs will now be described. Both of these schemes use an array called a "SID-to-Current Rule Map." The segments are mapped to the current rules using the current predictors in the SID-to-Current Rule Map. In this map, if an SID i uses a defining rule j, then the j-th column of the i-th row is a 1', otherwise it is a 0'. An example map is the following:

| Rule | a<=2 | a>2 | b<=6 | b>6 | c<=12 | c>12 |
|---|---|---|---|---|---|---|
| SID | | | | | | |
| 1 | 1 | 0 | 0 | 0 | 1 | 0 |
| 2 | 0 | 1 | 0 | 0 | 1 | 0 |
| 3 | 0 | 0 | 1 | 0 | 0 | 1 |
| 4 | 0 | 0 | 0 | 1 | 0 | 1 |
| 5 | 0 | 0 | 0 | 1 | 0 | 1 |

In a first scheme, a "pseudoSID-to-Rule Map" is generated by building all of the combinations of currently selected rules used in the present iteration. An example of such a map is as follows:

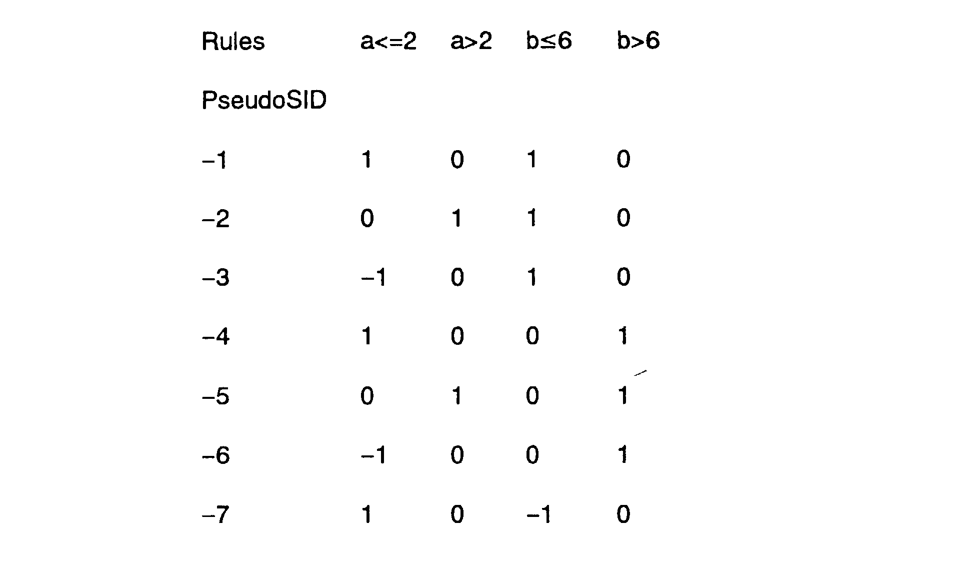

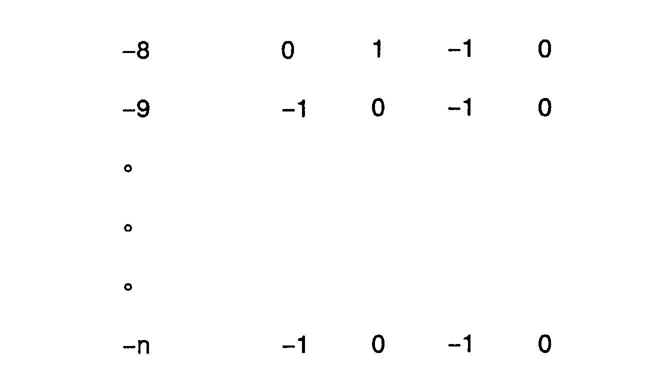

Any combinations in this PseudoSID-to-Rule Map which do not apply to any segment are deleted.

An alternate version of the PseudoSID-to-Rule Map is generated by creating the unique subsets of the SID-to-Rule Map. Such a map is following:

| | a<=2 | a>2 | b<=6 | b>6 |
|---|---|---|---|---|
| -1 | 1 | 0 | 0 | 0 |
| -2 | 0 | 1 | 0 | 0 |
| -3 | 0 | 0 | 1 | 0 |
| -4 | 0 | 0 | 0 | 1 |

Using the first scheme for the pseudoSID-to-Rule map, many select clauses may be generated, but there will be few rows in intermediate tables. The second scheme results in very fewer select clauses but potentially many rows in the intermediate tables, and sets a flag to add a clause to trap nodes when some segment has no current rules which apply to it.

Given a SID-to-Rule map and a PseudoSID-to-Rule map, the following array, herein called a PseudoSID-to-SID map is generated. This map indicates whether a SID i for a segment is still possible given an entity in PseudoSID j (1 when TRUE, 0 when FALSE). The following PseudoSID-to-SID map was generated using the second scheme.

| PseudoSID | | | | |
|---|---|---|---|---|
| | -1 | -2 | -3 | -4 |
| SID | | | | |
| 1 | 1 | 0 | 0 | 0 |
| 2 | 0 | 1 | 0 | 0 |
| 3 | 0 | 0 | 1 | 0 |
| 4 | 0 | 0 | 0 | 1 |
| 5 | 0 | 0 | 0 | 1 |

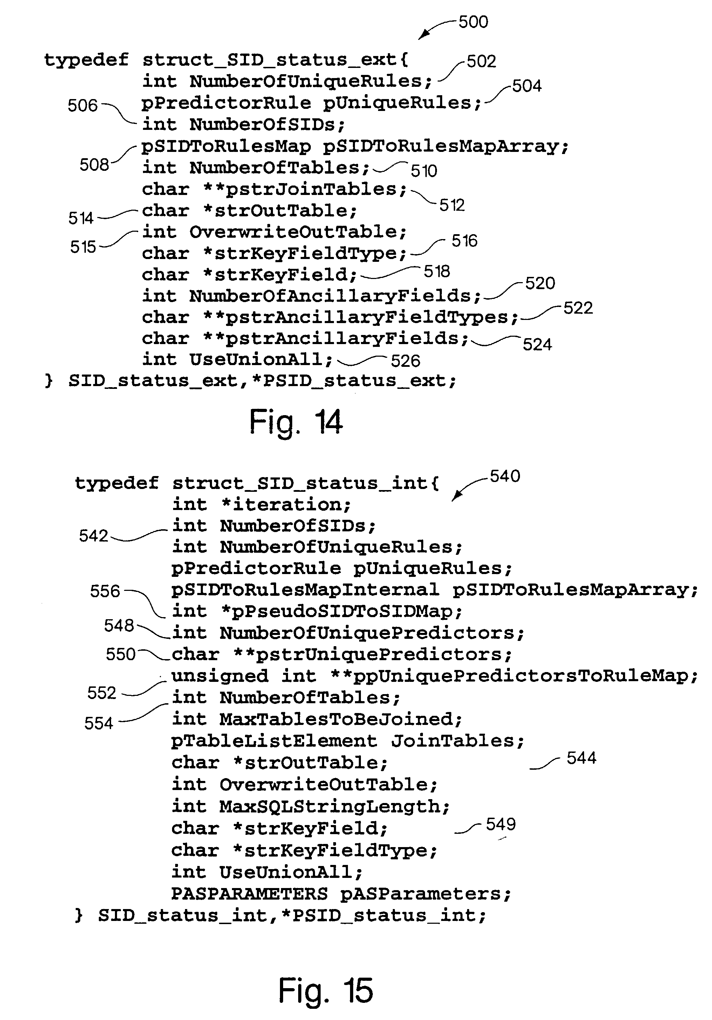

A third assignment scheme is based on the principal that there should be the same number of or fewer SQL clauses than database segments. To achieve this result, each SQL clause is restricted to tables used by a particular database segment. The process of generating the SQL clause from the database tables is such that the number of PseudoSIDs is less than or equal to one for each SID. With this assignment scheme, the performance is vastly improved as compared to the first two assignment schemes. In this third assignment scheme the PseudoSID-to-SID Map of the first iteration in the construction of SQL clauses is similar to the second assignment scheme. However, there are several differences in this third assignment scheme which occur in the iterative process of constructing SQL clauses, described below in connection with FIGS. 14-17.

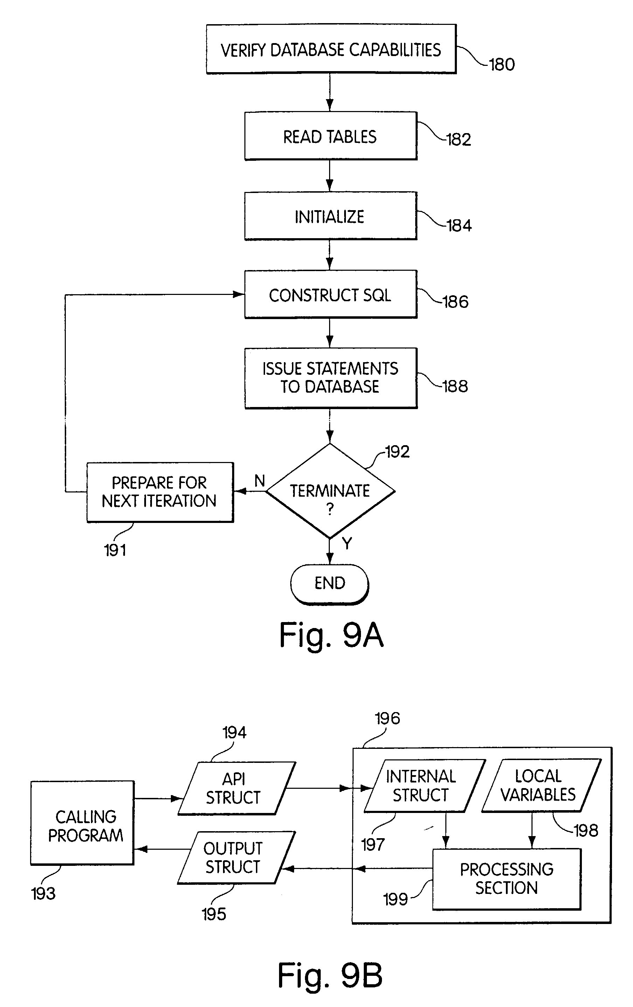

How these assignment schemes are used in the construction and application of SQL statements as described above will now be described in connection with FIGS. 9A and 9B. The first step of this process is verifying the capabilities of the database in step 180. This step verifies that the database supports the kinds of permissions used to apply the segment descriptions, such as the capability to create, update and drop tables. This step also involves verification that the tables and fields used in the application of a segment description are accessible.

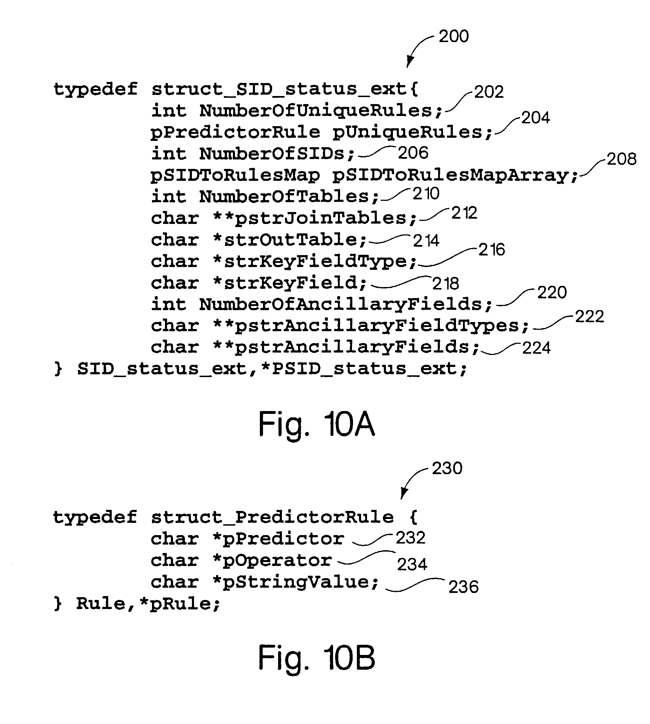

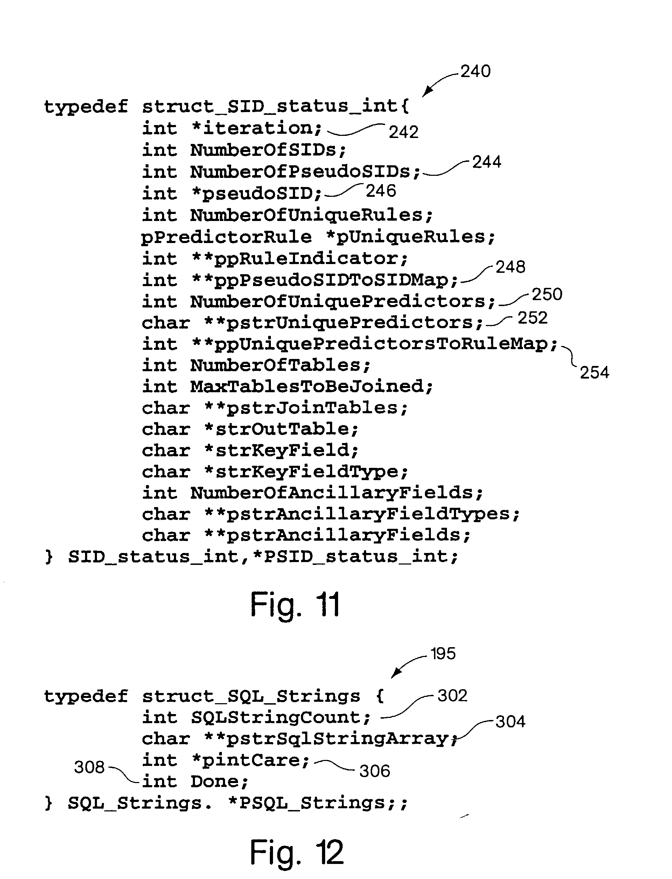

Next, segment descriptions are read from the tables 100, 106 and 118 into memory in step 182. Data structures, described below in connection with FIGS. 10A, 10B and 11 (using the first two assignment schemes) or FIGS. 14, 10B and 15 (using the third assignment scheme) are initialized in step 184. These data structures are used in step 186 of constructing the SQL statements, which is performed in accordance with one of the three PseudoSID assignment schemes as outlined above. The constructed SQL may be in a format such as described in Appendix I (using the first two assignment schemes) or Appendix III, (using the third assignment scheme). Since a relational database may include several types, different queries for different types of fields may also be used, such as found in Appendix II.

Given a set of constructed SQL statements, these SQL statements for each segment are issued to the database, in step 188. These statements cause rows to be inserted in a prediction table containing an entity identifier (a key) and a pseudoSID. After application of the constructed SQL statements, the data structures in FIGS. 10A, 10B and 11 or FIGS. 14, 10B and 15 are updated in step 190. If tables in a database containing predictors of the segment definitions remain in the database to be processed, as determined in step 192, additional SQL statements are constructed and issued to the database by repeating steps 186 through 192 to iteratively create a new prediction table based on a previous prediction table until a final prediction table is obtained at the end of the final iteration. In preparing for each iteration, in step 191, the data structures are updated to eliminate the rules already used, as described in more detail below.

Referring now to FIG. 9B, the construction of appropriate SQL statements will now be described by way of example. This embodiment of a system for constructing SQL statements uses an application programming interface in which a calling program 193 accesses a module 196 which handles the problem case where the number of tables to be joined is greater than a specified number. In the absence of such a problem case, the calling program can simply generate all of the SQL statements from the data read from the tables of FIGS. 5-7 to obtain the final output table such as shown in FIG. 8. Otherwise, entities in the database will have to be assigned to temporary segments until their segmentation can be completely determined. In this embodiment, the calling program constructs a read-only struct 194 which provides information useful in generating the SQL statements. This struct is described in more detail in connection with FIGS. 10A-10B and FIG. 14. The module 196 uses this struct 194 to generate an internal struct 197, described in more detail below in connection with FIGS. 11 and 15. A processing section 199 in the module 196 uses the internal struct 197 and local variables 198 to generate an output 195, which is a struct described in more detail below in connection with FIG. 12. This output struct 195 is used by the calling program 193 to issue a sequence of SQL statements such as indicated in Appendix I or Appendix III.

The module 196 also maintains and uses several local variables, as indicated at 198. These local variables include the number of pseudoSIDs for the current iteration which is used to dimension a current pseudoSID-to-SID map and to control the process of building "SELECT" clauses to be returned to the calling program. An array of pseudoSID numbers for a current iteration is also stored. The array is used in the creation of a "SELECT k pseudoSID" subclause found in each "SELECT" clause generated. The module 196 also maintains a pseudoSID-to-SID map as described above.

The potential combinations of univariate predictor clauses that define individual SQL "SELECT" strings are represented by a current predictors-to-rule map. An array of current predictors to be used to generate SQL statements is stored and is used to generate the current predictor-to-rule map. A number of current predictors available for a current join of tables is also stored and is used to dimension the current predictor array.

The processing section 199 of module 196 uses the internal struct 197 an local variables 198 to determine the pseudoSID to SID mapping according to one of the assignment schemes discussed above. This mapping is used to generate an output struct 195 which in turn is used by the calling program to issue SQL statements to the database. The output struct is described in more detail below.

In operation, the calling program 193 issues an initialization command, including an indication of the maximum number of tables to be joined by any statement, to module 196 which in turn initializes its internal data structure 240 (FIG. 11) or 540 (FIG. 15). The calling program then issues a processing command to module 196, instructing it to return SQL strings via the output struct 195. The SQL queries are read from the data structure 240 or 540 and are issued to the database. If the current iteration is not the last iteration, the calling program continues to issue processing commands to the module 196 and resulting SQL queries to the database. The module 196 handles creating SQL queries that create and drop intermediate tables which have names that alternate to avoid naming collisions.

When the last iteration is reached, the calling program places the final results in the prediction table, such as in FIG. 8.

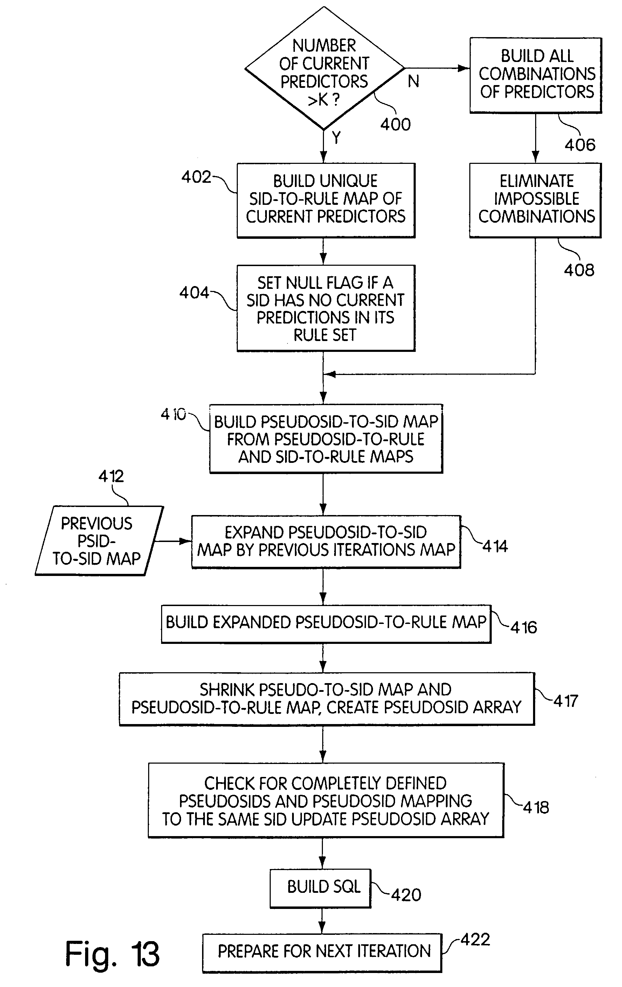

One process of constructing SQL statements including the generation of the Pseudo-to-SID mapping by module 196 will now be described in connection with FIG. 13. The goal is to generate an SQL statement that includes the data to be inserted into the prediction table and a group of select clauses that define the conditions under which a given entity will have a specific pseudoSID. The calling program uses a UNION operator as shown in Appendix I to combine the select clauses. This operator causes the entire prediction table to be built in a single scan of the database. To maximize efficiency, the number of select clauses should be minimized. The number of rows generated in the prediction table should be minimized, to take up less space in the database.

The first step of this process is determining which assignment scheme to use as indicated in step 400. With the first two of the three assignment schemes given above, where there is a large number of predictors, the second scheme should be used, while when there is a small number of predictors, the first scheme should be used. The third scheme has vastly improved performance over either the first or second schemes and is discussed in more detail below in connection with FIGS. 14-16. When using the first or second scheme, if there are more than a given number k of current predictors, as determined in step 400, a starter set for the PseudoSID-to-Rule Map is generated in step 402 by analysing the unique rule combinations based on the current predictor columns of the SID-to-Rule Map. Examples for k include 4 or 5. A flag is set in step 404 if there are segments for which none of the current predictors are in the segment definitions.

If the number of predictors is small, a PseudoSID-to-Rule Map is generated in step 406 by building all combinations of the current predictor rules, including rules assuming that the predictors are null, as indicated by -1 in the PseudoSiD-to-Rule Maps shown above. Next, all combinations in this PseudoSID-to-Rule Map which have no corresponding segment are eliminated in step 408. The result of either step 404 or step 408 is a PseudoSID-to-Rule Map, which, in combination with the SID-to-Rule Map, allows a PseudoSID-to-SID Map to be built for the current starter set in step 410. The PseudoSID-to-SID Map for the previous iteration, as indicated at 412, is used in combination with the PseudoSID-to-SID Map for the current starter set to expand the current starter set in step 414. This step is performed by identifying each pseudoSID in the new map and each pseudoSIDs in the old map that correspond to at least one of the same segments. For example, in the maps below the new pseudoSID -1 and the old pseudoSID -2 both map to SID 2. Thus, the expanded PseudoSID-to-SID Map maps pseudoSID -1 to SID 2. Similarly, new pseudoSID -2 maps to the same segments as old pseudoSID -1. Additionally, new pseudoSID -2 and old pseudoSID -2 both map to segment 3. Thus, an additional pseudoSID -3 is added in the expanded PseudoSID-to-SID Map which maps to segment 3.

| Old PseudoSID-to-SID | | | |
|---|---|---|---|
| SID | | | |
| PseudoSID | 1 | 2 | 3 |
| -1 | 1 | 0 | 1 |
| -2 | 0 | 1 | 1 |

| New PseudoSID-to-SID | | | |
|---|---|---|---|
| SID | | | |
| PseudoSID | 1 | 2 | 3 |
| -1 | 0 | 1 | 0 |
| -2 | 1 | 0 | 1 |

| Expanded PseudoSID-to-SID | | | |
|---|---|---|---|
| SID | | | |
| PseudoSID | 1 | 2 | 3 |
| -1 | 0 | 1 | 0 |
| -2 | 1 | 0 | 1 |
| -3 | 0 | 0 | 1 |

A previous pseudoSID array is then built that lists the pseudoSID of a previous iteration that corresponds to a row in the expanded PseudoSID-to-SID Map. The expanded PseudoSID-to-SID Map is then used in step 416 to build an expanded PseudoSID-to-Rule Map. In this step, each new PseudoSID added in the expanded PseudoSID-to-SID Map is assigned the rules of the PseudoSID in the new PseudoSID-to-SID Map which gave rise to the expanded PseudoSID and the expanded PseudoSID-to-SID Map.

The expanded PseudoSID-to-SID Map is then shrunk in step 417 by identifying any rows in the expanded PseudoSID-to-SID Map that are identical and for which the corresponding rows in the expanded PseudoSID-to-Rule Map are identical. An array of strings, one per shrunken PseudoSID-to-SID Map row is generated from the previous PseudoSID array, where each string contains those PseudoSIDs from the previous iteration that are appropriate to the shrunken PseudoSID-to-SID Map row. An array of new PseudoSID names is then built, called the pseudoSID array, where each element in the array corresponds to one of the rows in the shrunken PseudoSID-to-SID Map.

Next, the PseudoSID-to-Rule Map is checked to identify any completely defined PseudoSID, i.e., which maps directly to only one segment. This occurs when a segment has not predictors in the tables that remain to be joined in further iterations. The corresponding PseudoSIDs is replaced in the PseudoSID array by the SID to which it maps.

Finally, if multiple pseudoSIDs can be classified as SID j, then there may be a group of entities that share both conditions with respect to the current predictor set and potential final classification set. Thus, again, all of the above arrays can be reduced in size, thereby reducing the number of resulting SQL clauses. The differences among the multiple PseudoSIDs that can be classified as SID j are differences in values of predictors in rules that are not in the SIDs defining rule set. Here, the first instance of such PseudoSIDs may be kept and the rules that are not in the SIDs defining rule set may be ignored in the Select clause.

Next, appropriate SQL statements corresponding to the PseudoSID-to-Rule Map are generated in step 420.

The select clauses are in the following form:
SELECT keyfield, -i as PseudoSID
FROM previous_iteration_table, current_predictor_table(s)
WHERE previous_iteration_table.PseudoSID in (l, m,...r)
AND current_predictor_1= a,...,
for each current PseudoSID i in the PseudoSID Array, where (l, m,..., r) is obtained from the string of previous PseudoSIDs corresponding to the current PseudoSID, and the rules are obtained from the PseudoSID-to-Rule Map or SID-to-Rule Map. Thus, a select clause is generated for each pseudoSID. The "where" clause defines the conditions under which an entity will be given a pseudoSID, including the previous pseudoSID of the entity and the current predictor rule.

These select clauses are returned to the calling program via an output struct 195, which will now be described in connection with FIG. 12. This struct contains a count 302 of the SQL strings built in step 420 and an array 304 of the SQL select clauses. An integer array 306, having a length defined by count 302, may be used to indicate whether an error from submission of an SQL string should cause the routine to abort. For example, a DROP TABLE command should not cause termination if the table does not exist. A boolean value 308 is included to identify whether the current iteration is the last iteration.

Referring again to FIG. 13, after SQL statement are built in step 420, and if the iteration is not the last iteration, preparations are made for the next iteration to be performed by the processing section 199 in step 422. Preparation for the next iteration causes a number of changes to be made to the internal data struct in FIG. 11. In particular, the list of tables to be joined changes. The currently joined tables are dropped from the list of tables (pstrJoinTables). The number of tables to be joined (NumberOfTables) is appropriately decremented. If the number of tables to be joined drops to 0, then the iterative process is done. No further changes need to be made to the internal data struct. Otherwise, the temporary table just created is moved to the front of the list of tables and the number of tables is then incremented by 1.

The number of PseudoSIDs (NumberOfPseudoSIDs), the pseudoSID array (pseudoSID) and the pseudoSID-to-SID map (ppPseudoSIDToSIDmap) represent data from the prior iteration and are updated. The values are replaced with corresponding local structure values after appropriate memory handling activities.

Another process for construction SQL clauses will now be described in connection with FIGS. 14-16. This process generally uses the process described in FIG. 9A, using the application programming interface described in connection with FIG. 9B. In this embodiment, however, the API struct 194 corresponds to the struct 500 shown in FIG. 14. The internal struct 197 in FIG. 9B corresponds to the struct 540 shown in FIG. 15.

The structs of FIGS. 14 and 15 will now be described. Referring now to FIG. 14, the data structure of the application programming interface used for representing the information passed to module 196 is shown. In this embodiment, the data structure is a struct 500 in the C programming language. It contains an indication 502 of the number of unique rules and a pointer 504 to an array of rule structs, described above in connection with FIG. 10B. The struct also contains the number of segments 506 and a pointer 508 to a struct which contains an array representing a SID-to-Rule Map as described above. For example, the array stores one value, e.g., 1, at [i,j] if the rule j applies to segment i, otherwise the array stores another value, e.g., 0.

The struct also includes an indicator 510 of the number of tables in which the rule predictors reside. The names 512 of the tables in which these predictors reside are also provided as a string. The user also provides a name 514 of a table in which the results of the application of the segment definitions should be placed. An integer 515 is also stored for allowing a user to control overwriting of tables with duplicate names when a table is created. When set, a table which is created with a duplicate name causes the existing table to be dropped, otherwise the program aborts when such a condition exists. The user also identifies the key field which is used to uniquely identify entities in the database to which the segmentation is applied. The name 518 and data type 516 of this field are also provided. A user may also identify ancillary fields from which data will be taken for each entity to be placed in the output table. The struct may also include the number 520 of fields identified and strings 522 and 524 representing the types and names respectively of these fields. Finally, an integer 526 is used to allow a user to specify a number of the constructed SQL clauses which can be unioned.

As above with the other method, the structs 500 and 230 are initialized by the calling program 193 by reading the segment definition tables in FIGS. 5-7A and 7B and using the values read to set the appropriate values in the structs. A second struct 540 (FIG. 15) is constructed in this embodiment by the module 196 from the structs 500 and 230 in the initialization step 184 of FIG. 9B in response to a command from the calling program 193. This second struct 540 is used for constructing SQL queries and will now be described in connection with FIG. 15.

This struct 540 in FIG. 15 includes many of the same components as struct 240 of FIG. 11 and struct 500 of FIG. 14. It includes an iteration number 542 which is useful for tracking the number of iterations performed, which in turn allows for special handling of the first iteration, tracking the number of iterations performed, which in turn allows for special handling of the first iteration.

The pseudoSID-to-SID map of the last iteration is also stored at 548. A number 550 of unique predictors is used to dimension a unique predictor array 552. This array 552 is used in the construction of a unique predictors-to-rule map 554, which in turn is used to map SIDs to current rules.

The struct 540 also includes a pointer 556 to an internal SID-to-Rule Map array which has the same structure as the SID-to-Rule Map in FIG. 14, but is modified during the iterative process of generating SQL. A pointer 544 to a list of the tables to be joined is also used. This list maps an integer index value to each table name to allow easy access to the tables to be joined. Another integer 549 stores the maximum string length of an SQL statement for the database being used an which is used to check whether a generated SQL query should be divided into two queries.

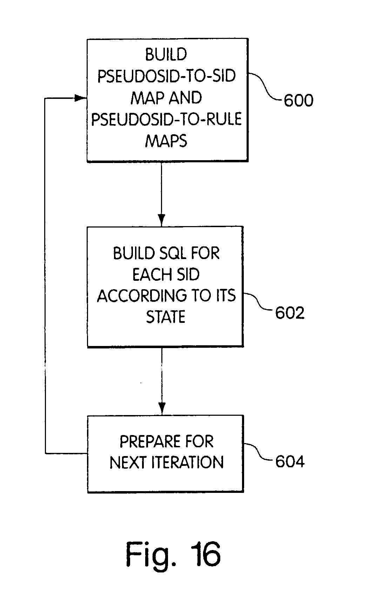

A process for constructing the SQL statements using the data structures 14, 10B and 15, will now be described in connection with FIG. 16. As with the methods described above in connected with FIG. 13, entities are assigned to segments in stages. A list of tables containing the required predictor set and a maximum number k of tables to be joined are used. Tables are joined in the order specified in the list. The first iteration joins k predictor tables. Subsequent iterations join k-1 predictor tables with an intermediate table that encapsulates the information obtained from all previous iterations. During each iteration all accessible tests based on predictors in the current tables are applied to create the intermediate SID (pseudoSID) assignments. The intermediate assignments are instantiated through an insert statement into an intermediate table.

In this method, however, only tables which contain predictors associated with a given SID appear in the SQL select clauses for that SID. A SID may become fully-defined during an intermediate iteration when all of its required predictors are in tables that have been used at the completion of the intermediate iteration. Entities associated with fully-defined SIDs are shunted to a final table immediately. As a consequence of the table restriction on SQL clauses and shunting, the method assigns each entity to a SID that meets all of the tests associated with the SID. Hence, the method simulates a full outer join.

At all iterations, except possibly the last, this method generates fewer SQL select clauses than the number of SIDs. This is done by ensuring that each SID is assigned to only one PseudoSID. During all iterations, except the last, this method may generate an intermediate table with m (m≥1) times the number of rows that will appear in the final table. "m" is the number of partitions of the data created through application of the current rule set.

At the beginning of each iteration, for each SID there are two possible states regarding the current rule set:
1. A SID has no currently applicable tests; and
2. A SID has currently applicable tests. Given that a SID has currently applicable tests, there are again two possibilities:
   a. All the tables in the current iteration may be required by the SID's current test set; and
   b. At least one, but not all, of the current iterations tables are required by the SID's current test set.
In addition, at the beginning and end of each iteration the SID will be in one of three states:
1. Completely undefined (None of its tests have been applied in previous iterations);
2. Partially defined (Some of its tests have been applied in previous iterations); and
3. A SID is completely defined (All of its tests have been applied in previous iterations).
If a SID is partially defined, then in general it will be indistinguishable, i.e. from one or more other SIDs given current information. For a set of SIDs that are indistinguishable i.e. have same PSID, given current information, one SID (k) has the minimum SID number.

Each possibility and each state is handled differently in the insert clause.

A SID, i, with no currently applicable tests and that is completely undefined will be ignored during the current iteration. Such a SID cannot require any of the tables up to and including those in the current iteration. As stated above, to obtain all the entities that meet the conditions of SID i, we only include required tables in SID i's SQL clauses. No required table, thus no SQL clause.

A SID, i, with no currently applicable tests, that is completely defined will also be ignored during the current iteration. That is because all entities in the SID already are in the final table.

A SID, i = k, with no currently applicable tests, which has been partially defined and which was the minimum among its indistinguishable SID subset has an associated SQL select clause as shown at "A" in Appendix III. In the current iteration, there can be a change in the members of the subset of SIDs that are indistinguishable, because one or more of the members can have currently applicable rules not shared by the other members. If SID i was not the minimum SID k in its group on the previous iteration, but becomes the minimum in the current iteration, the SQL clause shown at "A" in Appendix III is used, where i is the current SID number and k is the previous minimum SID of its group on the previous iteration.

A SID, i ≠ k, with no currently applicable tests, that has been partially defined, which was not the minimum among its' indistinguishable SID subset and does not become the minimum during the current iteration will be ignored in the current iteration. Note, that all of SID i's entities will be carried through to the next iteration by SID k. If a SQL clause were added for SID i, the intermediate table's rows would be expanded unnecessarily.

A SID, i, with currently applicable test(s), which was completely undefined as of the previous iteration, is the minimum among its' indistinguishable SID subset, has x required tables in the current iteration, y tests and is partially-defined after the current iteration has an associated SQL select clause as shown at "B" in Appendix III. If this SID, i, had all the same conditions but was fully-defined at the end of the current iteration, then the associated SQL differs only in the insert into subclause as shown at C In Appendix Ill.

As above, any SID i, which is not the member of its indistinguishable subset having the minimum number at the conclusion of the current iteration, is ignored in the current iteration.

A SID, i, with currently applicable test(s), which is partially-defined as of the previous iteration with minimum SID k and which is the minimum among it's indistinguishable SID subset at the end of the current iteration, has x required tables in the current iteration, y tests and is partially-defined after the current iteration has an associated SQL select clause as shown at "D" in Appendix III. If this SID, i, had all the same conditions but was fully-defined at the end of the current iteration, then the associated SQL differs only in the insert into subclause as shown at "E" in Appendix III.

SQL clauses are generated according to the foregoing description in an iterative process which will now be described in connection with FIG. 16. The first step of this process of the construction of the PseudoSID-to-SID Maps and PseudoSID-to-Rule Maps using the SID-to-Rule Map. In this example, a completely undefined SID for a current iteration as the PseudoSID number 0. A partially defined SID will have a PseudoSID equal to the negative of the lowest number indistinguishable SID. A completely defined SID has a PseudoSID equal to the SID number. These maps are constructed in step 600 of FIG. 16.

Table 1 shows the SID-to-Rule, SID-to-PseudoSID and PseudoSID-to-Rule Maps combined as one table for the first iteration of an example. Note that each SID corresponds to only one PseudoSID.

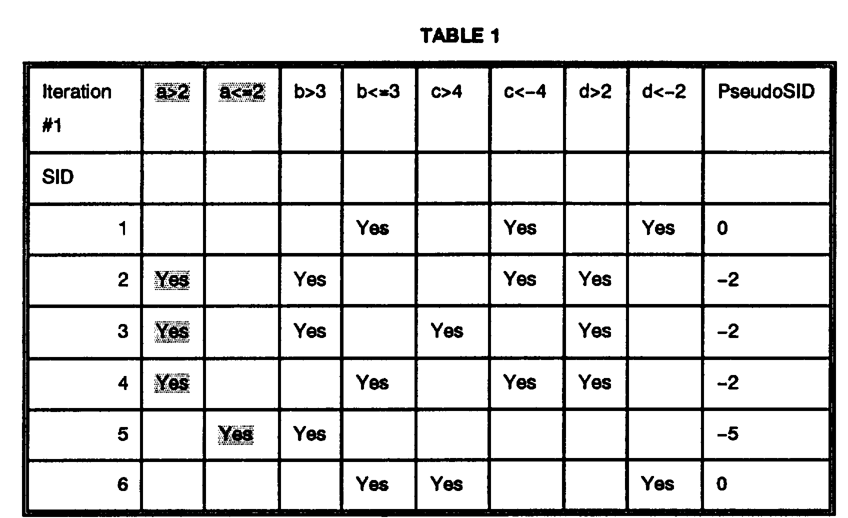

Given the construction of the PseudoSID-to-SID Mapping, the SQL statements for each SID are then constructed in step 602 according to the state of the SID. For example, given the conditions outlined above, SIDs 1, 3, 4 and 6 have no corresponding SQL clauses generated for them. SIDs 1 and 6 do not have SQL clauses generated because there are no currently applicable rules. SIDs 3 and 4 do not have SQL clauses generated because they are not the first SID in a group with a common current rule set. SID 2, however, has an insert statement generated in the following form:

Insert into intermediate Table 1, select ID, -2 pseudoSID from Table 1 where Table 1.A is >2. This clause is generated because SID 2 is the first SID of a group of a current common rule set. SID 5 has a similar insert clause generated.

After these insert clauses are generated in step 602, they can be applied to the database and preparation to the next iteration can be performed in step 604.

At the next iteration, step 600 of generating the PseudoSID-to-SID Mapping relies on the previous mapping and the current rule set. Because SID number 1 previously had PseudoSID 0, and now has a currently applicable rule, its PseudoSID number is now -1. The PseudoSID number for SID 2 (-2) remains unchanged, as does the PseudoSID number for SID 3 (-2). This is because SIDs 2 and 3 were previously indistinguishable, and the currently applicable rule set does not further distinguish them from each other. In contrast, SID 4 is now distinguished from SIDs 3 and 2 and is thus assigned PseudoSID -4. SID 5 becomes completely defined using the rule set in iteration 2, and thus its PseudoSID value is now equal to its SID value. Additionally, SID 6, being previously undefined, similar to SID 1, was indistinguishable from SID 1. However, since the currently applicable rule set fails to further distinguish SID 1 from SID 6, SID 6 is assigned the PseudoSID -1. The PseudoSID-to-SID Mapping for this next iteration is thus shown below in Table 2.

Given a PseudoSID-to-SID Mapping in a currently applicable rule set, SQL clauses need only be generated for SIDs having negative PseudoSIDs, which are the negative of the SID number.

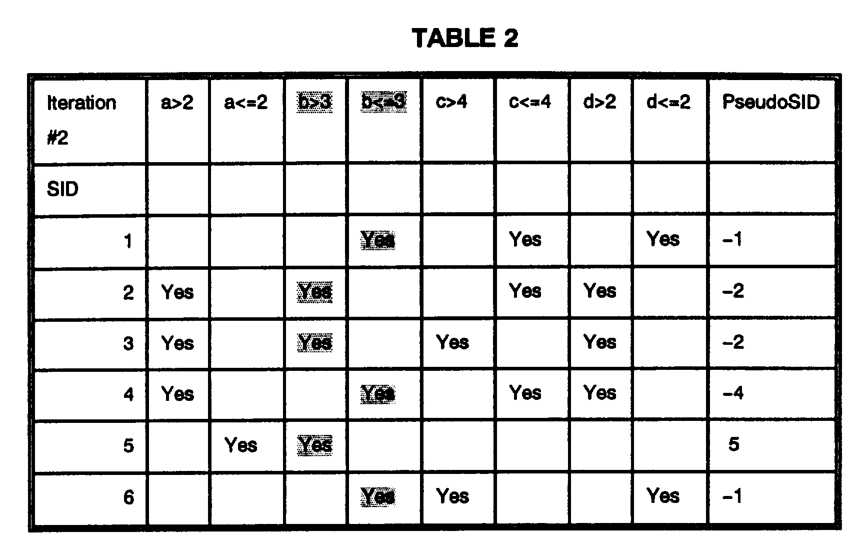

At the next iteration, the PseudoSID-to-SID Mapping is shown in Table 3.

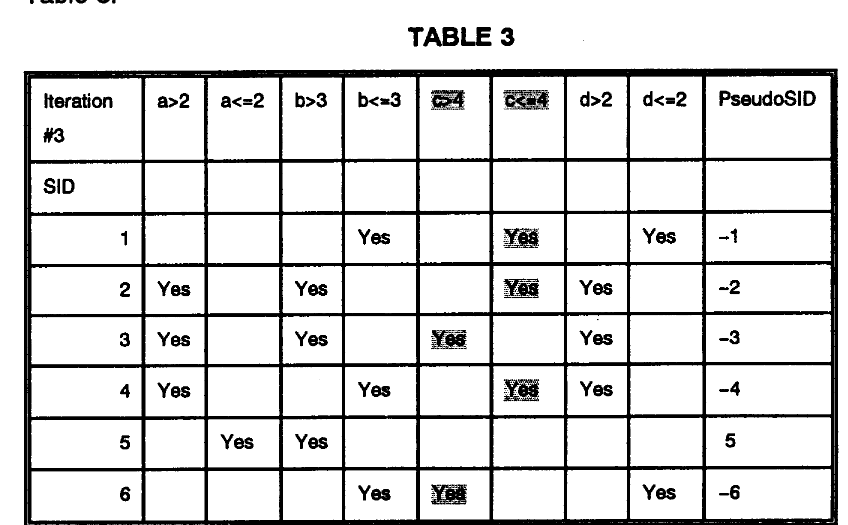

The final mapping is then as shown below in Table 4.

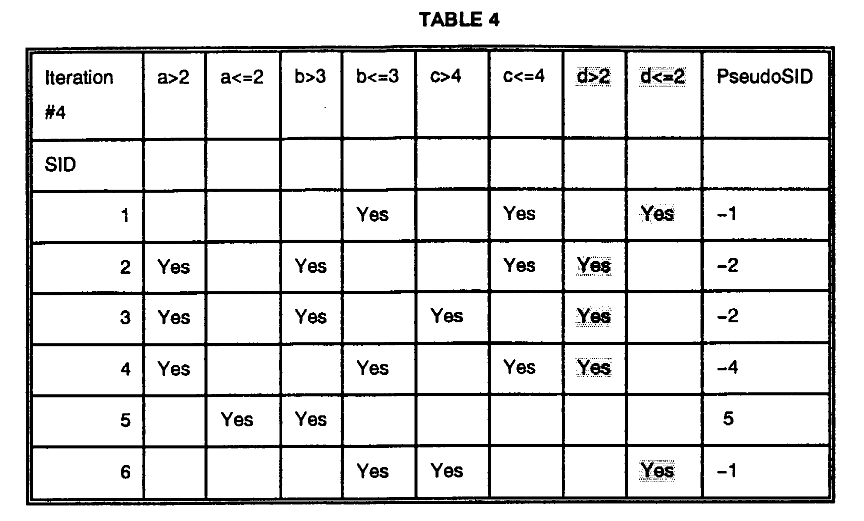

Using the foregoing method, a minimum of SQL clauses is generated. This method provides significant improvements in performance over methods related to the first two assignment schemes for the PseudoSID-to-SID Mapping.

The present invention enables segment definitions generated from classification of a database to be applied to data within a database. This capability is particularly beneficial since the results of the classification become part of the database and can then be accessed in the same manner as other data in the database. This capability is particularly useful in generating a multidimensional database from the data in which segmentation of database entities is a dimension of the database. Additionally, this system operates on data where they reside, i.e., in the database, and eliminates unnecessary copying.

Given the application of segment definitions to relate entities in a database to a segment, this information may be used in many ways, for example to assist in making various business decisions. Information about different segments may also be viewed using several visualization techniques. An example method for visualizing data segments in a computer database is found in commonly-owned European Patent Application entitled "Graphical User Interface and Display Process for Data Segments in a Computer Database," filed on even date herewith.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalent thereto.

Each feature disclosed in the description, and (where appropriate) the claims and drawings may be provided independently or in any appropriate combination.

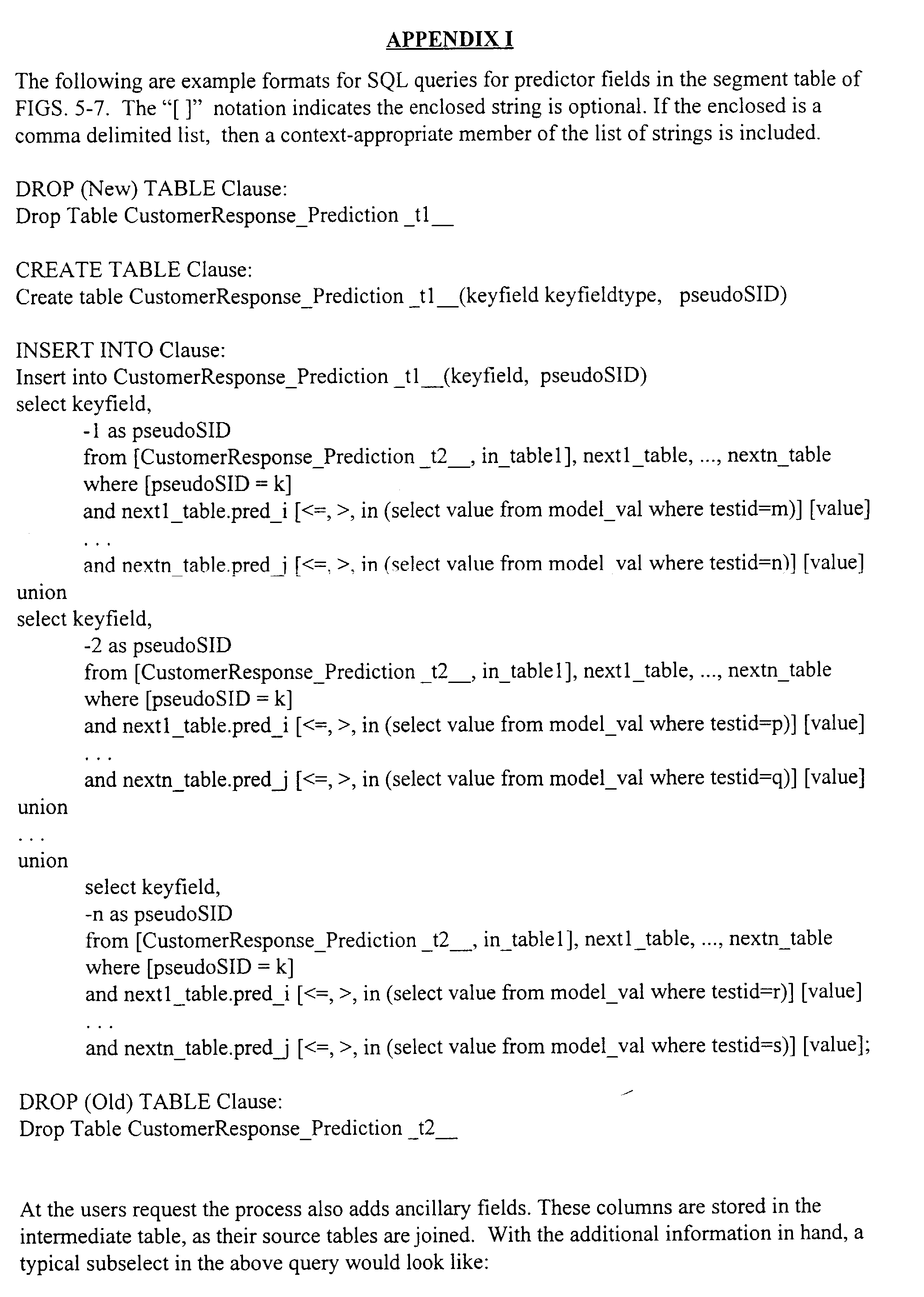

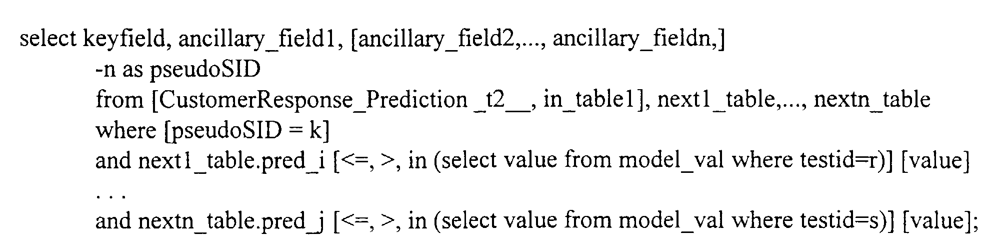

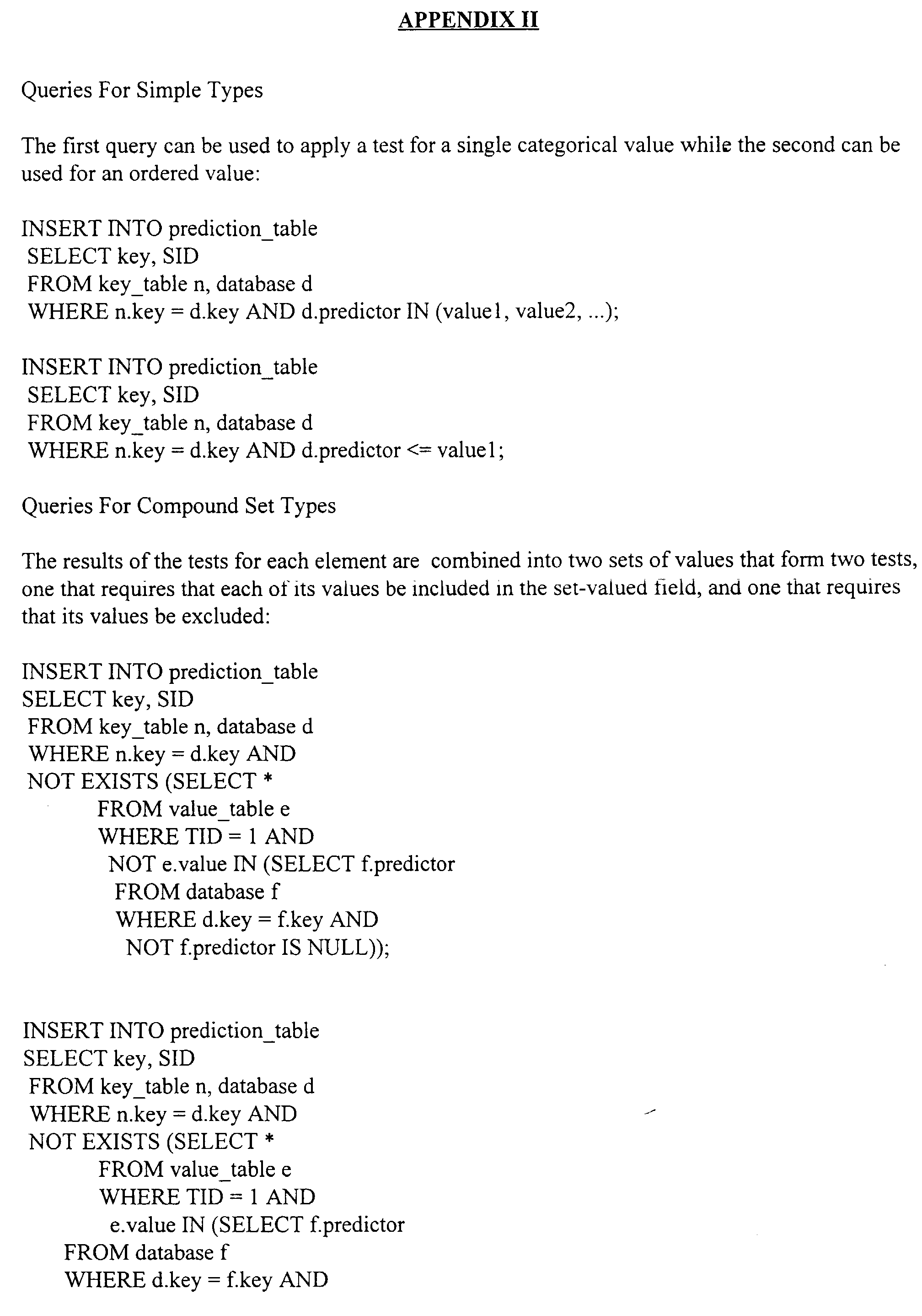

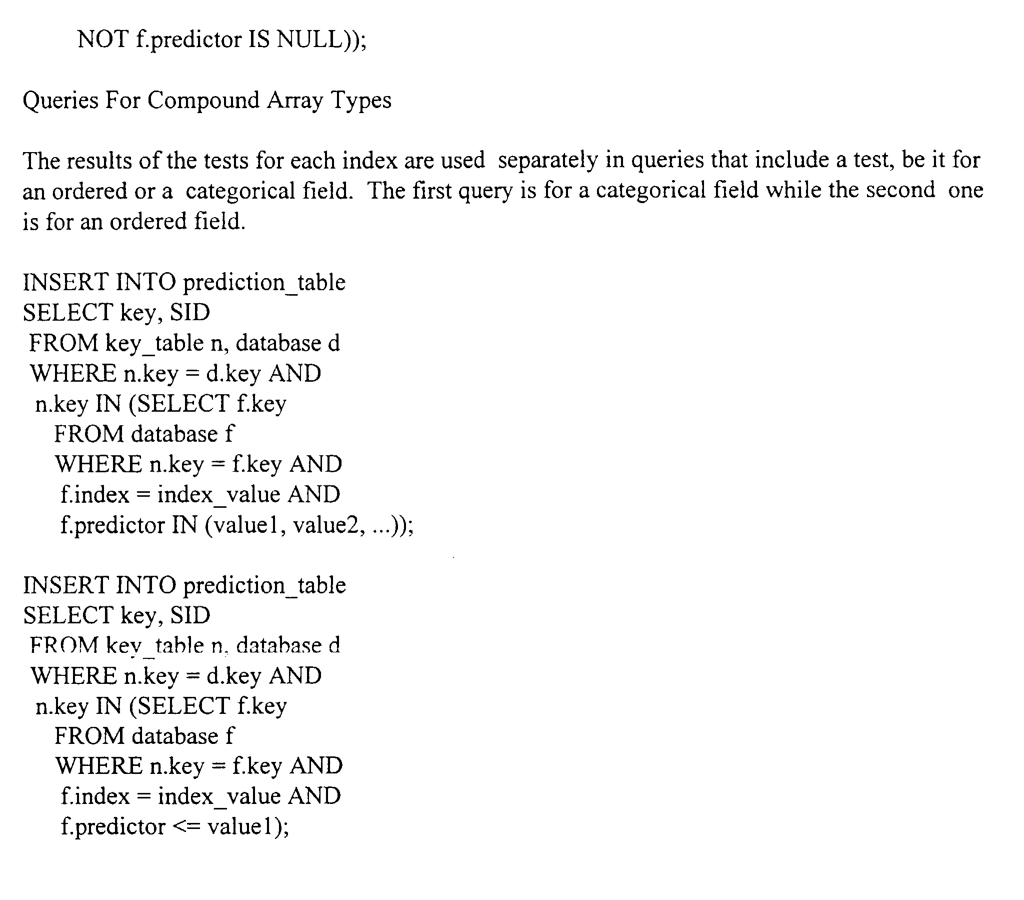

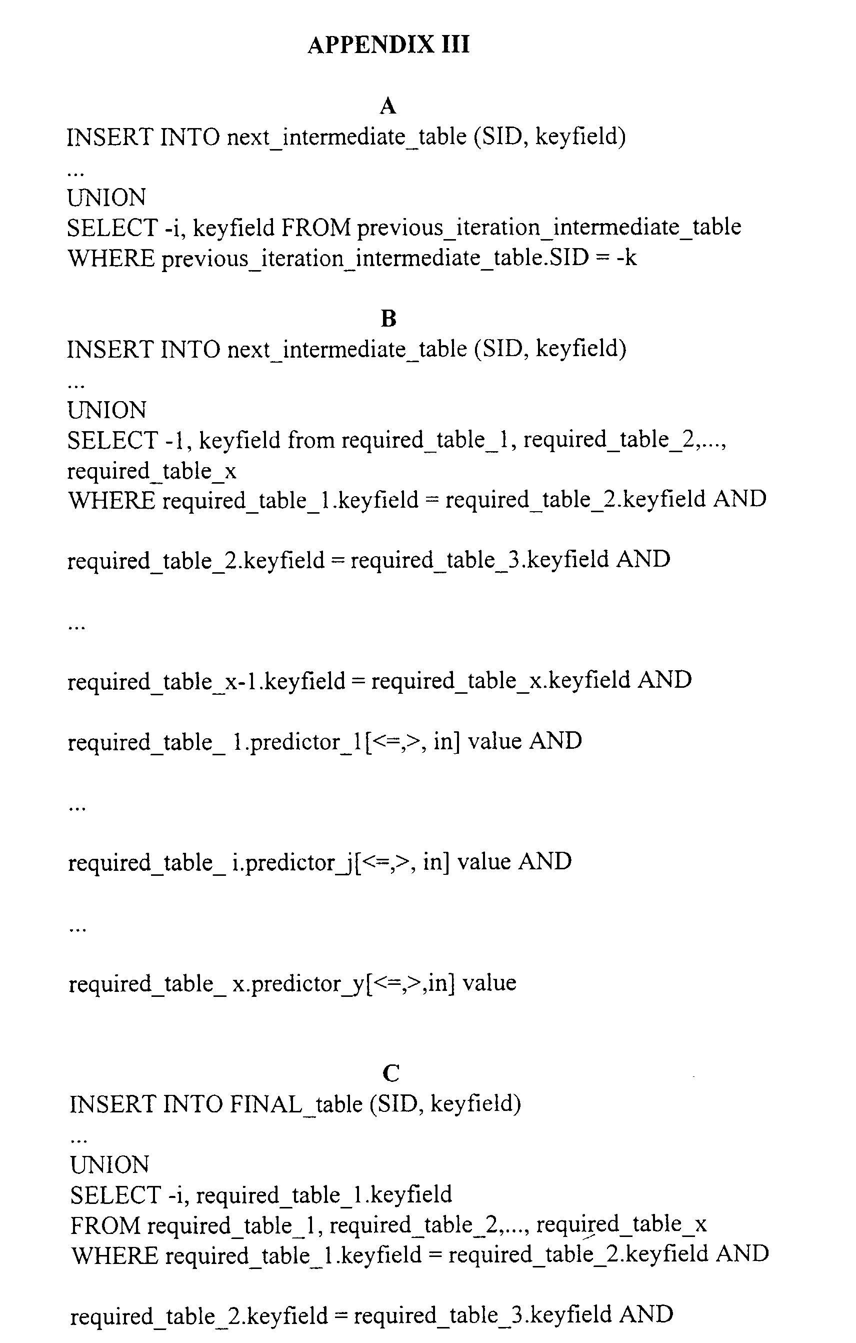

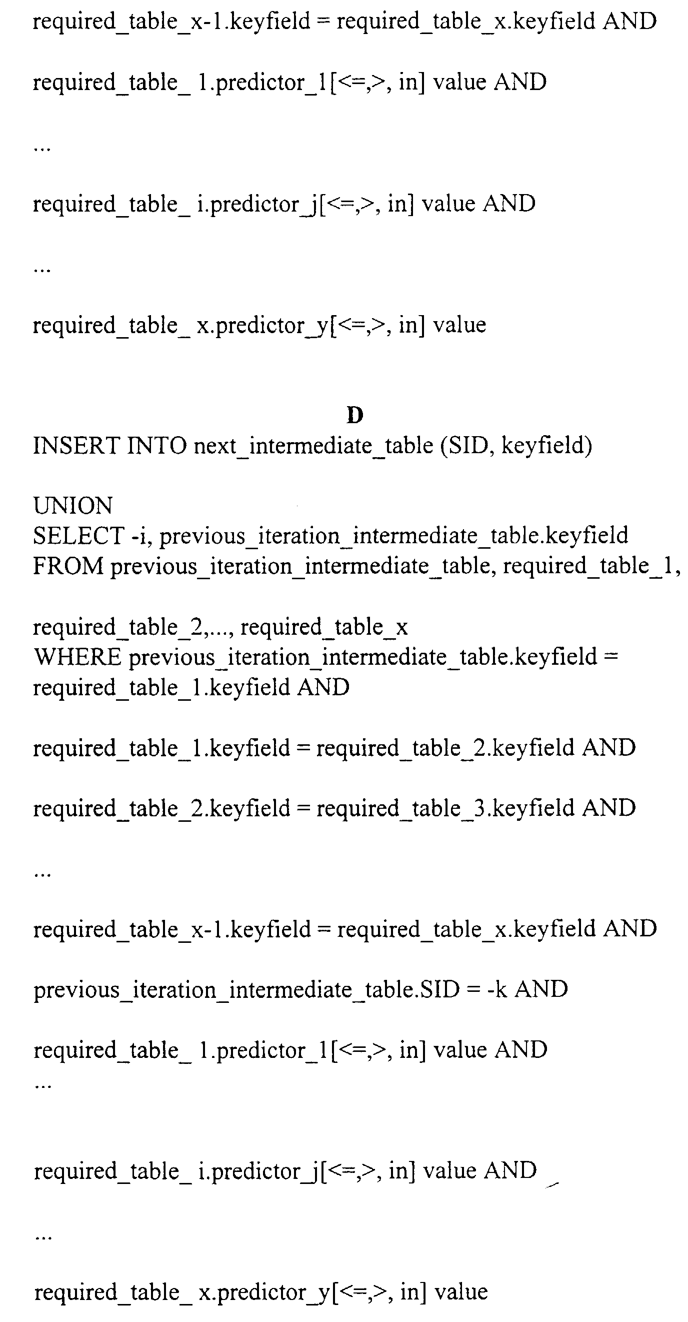

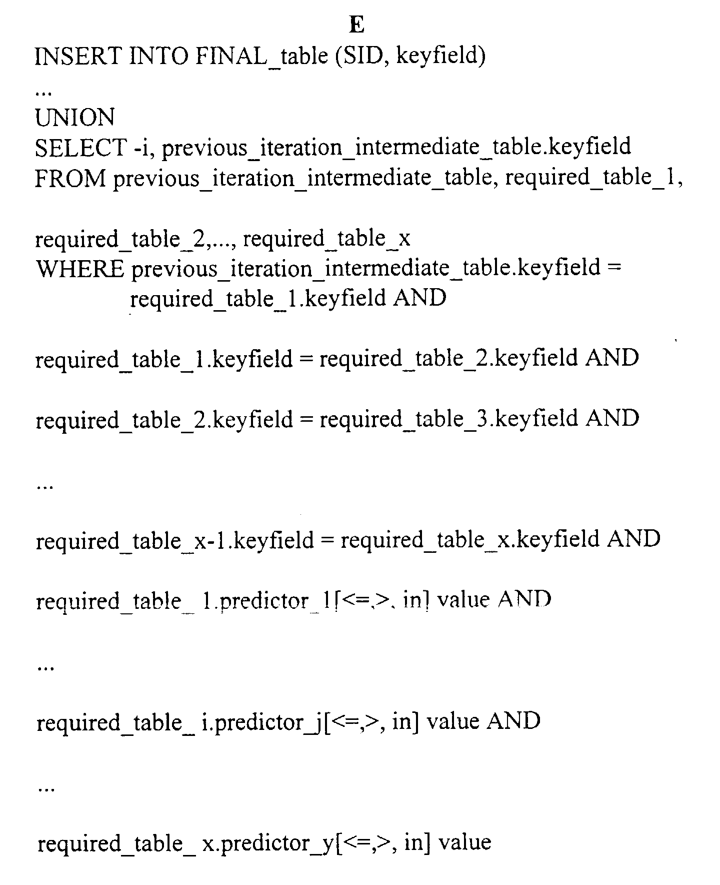

## Claims

1. A computer database system for applying segment definitions of segments defined by selection criteria to a database of entities with a plurality of fields in different tables, comprising:
means for storing a mapping of temporary identifiers to segment identifiers according to queries which represent a portion of a segment definition;
means for generating intermediate classifications of the entities in the database using temporary identifiers according to the stored mapping; and
means for combining intermediate classifications into a final classification of a set of entities into segments.

2. A computer-implemented process for applying segment definitions of segments defined by selection criteria to a database of entitles with a plurality of fields in different tables, comprising the steps of:
storing a mapping of temporary identifiers to segment identifiers according to queries which represent a portion of a segment definition;
generating intermediate classifications of the entities in the database using temporary identifiers according to the stored mapping; and
combining intermediate classifications into a final classification of a set of entities into segments.
